# EUROPEAN PATENT APPLICATION

(11) **EP 0 717 403 A1**
(43) Date of publication of application: **19.06.1996**
(21) Application number: 95203461.9
(22) Date of filing: 12.12.1995
(51) Int. Cl.: G11B 7/24, C09B 45/00, C09B 27/00

(54) **Heterocyclylazoaniline dyes, heterocyclylazoaniline dye metal complexes and their use in optical elements**

(30) Priority: 15.12.1994 US 356429
(71) Applicant: EASTMAN KODAK COMPANY, Rochester, New York 14650-2201 (US)
(72) Inventor: Cunningham, Michael Paul, c/o Eastman Kodak Co., Rochester, New York 14650-2201 (US); Evans, Steven, c/o Eastman Kodak Company, Rochester, New York 14650-2201 (US)
(74) Representative: Haile, Helen Cynthia

(57) **Abstract**

Heterocyclylazoaniline dyes having a sulfonyl- or acylamino substituent on the aniline ring are disclosed. Metal complexes of the dyes are useful in the optical recording layers of optical recording elements, particularly writable Photo CD recording layers.

## Description

The present invention relates to optical recording elements, including recordable optical compact disks.

There are many types of known optical recording elements. In many of the elements, the mode of operation requires a recording layer having a high absorption and that the recorded areas, often referred to as pits, have low optical density or high reflection. The high reflection pits are made by ablating away the high absorption recording material, usually exposing an underlying reflective support.

One of the currently popular forms of optical storage of information is the compact disk or CD. Digital information is stored in the form of high optical density marks or pits on an otherwise reflective background, the exact opposite of the above described optical recording materials. In this format, the optical information is most often in the form of read only memory or ROM. Optical information is not usually recorded in real time but rather is produced by press molding. In a typical process, the optical recording substrate is first press molded with a master containing the digital information to be reproduced. The thus-formed information is then overcoated with a reflective layer and then with an optional protective layer. In those areas having the deformations or pits, the optical density is higher than in those areas not having the deformations.

Writeable CD media such as used in the Kodak Photo CD system require the use of an active recording layer which must have very specific optical properties. The layer must, in conjunction with an auxiliary reflective layer, provide high reflectivity in unwritten areas and a mechanism for coupling with incident laser irradiation to provide significant losses in reflectivity in written areas. The layer must also have good stability towards light, heat and humidity for acceptable shelf life.

Most often the active recording layer is an amorphous layer of an organic dye or dyes which owe their optical properties to anomalous dispersion. The dispersion is described as anomalous because of the sharp changes in refractive index which occur in the neighborhood of an absorption band. Strong absorption of light by the recording layer at wavelengths slightly less than that of the writing laser leads to a high real component (N) of the index of refraction at the write laser wavelength. Absorption of light at the writing laser wavelength (determined by k, also known as the imaginary component of the index of refraction) must be finite but low, to insure a balance between coupling and reflectivity. High values of N at the laser wavelength facilitate achieving strong recording contrast upon the absorption of light by the recording layer and the concomitant chemical/physical changes.

Dyes having large values of N at the writing laser wavelength (usually at 775 to 800 nm in the near infrared) are not common, and those which have appropriate indices and an efficient mechanism for coupling with the incident laser irradiation to provide significant recording contrast (losses in reflectivity) are even rarer.

To date, commercial writeable CD optical recording elements based on an active organic dye layer have employed either mixtures of cyanine dyes with added stabilizers or mixtures of metallated phthalocyanine dyes. Cyanine dyes suffer from poor light stability even when combined with stabilizers. Phthalocyanine dyes are expensive and amorphous mixtures are difficult to achieve.

JP04-361088 and U.S Patent 4,686,143 disclose metal complexes of heterocyclylazoaniline dyes including those derived from 6-membered ring heterocycles for use in optical recording. The embodiments we tested performed inadequately in recording layers of writable CDs.

JP03-268994 discloses metal complexes of heterocyclylazoaniline dyes containing a sulfonylamino liganding group in the aniline ring for use in optical recording. However, only dyes derived from 5-membered ring heterocycles are disclosed. The embodiments we tested performed inadequately in recording layers of writable CDs.

This invention presents new heterocyclylazoaniline dyes. The dyes are used to form metal complexes. The metal complexes are useful in the recording layers of optical recording elements such as writeable Photo CD optical elements. In general the dyes have the structure (I) 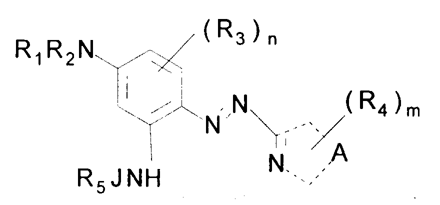 wherein:
R₁ and R₂ each independently, represents hydrogen, substituted or unsubstituted alkyl of 1-12 carbon atoms, aryl of 6-10 carbon atoms or allyl; wherein the substituents for each of the latter 3 groups include hydroxy, acyloxy, alkoxy, aryloxy, alkylthio, arylthio, alkylsulfonyl, arylsufonyl, thiocyano, cyano, nitro, halogen, alkoxycarbonyl, aryloxycarbonyl, acetyl, aroyl, alkylaminocarbonyl, arylaminocarbonyl, alkylaminocarbonyloxy, arylaminocarbonyloxy, acylamino, amino, alkylamino, arylamino, carboxy, sulfo, trihalomethyl, alkyl, aryl, hetaryl, alkylureido, arylureido, succinimido, phthalimido; provided R₁ and R₂ are not both hydrogen;
R₃ and R₄, each independently represents H, acyloxy, alkoxy, aryloxy, alkylthio, arylthio, alkylsulfonyl, arylsulfonyl, alkylaminosulfonyl, arylaminosulfonyl, thiocyano, cyano, halogen, alkoxycarbonyl, aryloxycarbonyl, acetyl, aroyl, alkylaminocarbonyl, arylaminocarbonyl, alkylaminocarbonyloxy, arylaminocarbonyloxy, acylamino, amino, alkylamino, arylamino, trihalomethyl, alkyl, aryl, hetaryl, alkylureido, arylureido, succinimido, phthalimido, or nitro;
R₅ represents substituted or unsubstituted alkyl of 1-12 carbon atoms, aryl of 6-10 carbon atoms or allyl; wherein the substituents for each of the latter 3 groups include hydroxy, acyloxy, alkoxy, aryloxy, alkylthio, arylthio, alkylsulfonyl, arylsufonyl, thiocyano, cyano, nitro, halogen, alkoxycarbonyl, aryloxycarbonyl, acetyl, aroyl, alkylaminocarbonyl, arylaminocarbonyl, alkylaminocarbonyloxy, arylaminocarbonyloxy, acylamino, amino, alkylamino, arylamino, carboxy, sulfo, trihalomethyl, alkyl, aryl, hetaryl, alkylureido, arylureido, succinimido, phthalimido; or
(a) R₁ and R₂ can join together to form a 5- or 6-membered ring such as morpholine, pyrroline or piperazine; or (b) either R₁ or R₂, or both of R₁ and R₂ can join with R₃ to form a 5- or 6-membered ring such as tetrahydroquinoline or benzomorpholine; or (c) two adjacent R₃ substituents can combine to form a 5-or 6-membered carbocylic or heterocyclic saturated or aromatic ring such as naphthalene, benzothiazole, tetrahydronaphthalene or quinoline; or (d) any two of R₄ substituents located on adjacent carbon atoms can be combined together to form a 5 or 6 membered saturated or unsaturated heterocyclic ring or carbocyclic ring such as quinoline, quinoxaline, imidazopyridine or tetrahydroquinoline;

n represents 1 to 3;
m represents 1 to 4;

J represents -CO- or -SO₂-; and
A represents the atoms necessary to form a 6-membered heteroaromatic ring such as pyridine, pyrazine, pyrimidine or pyridazine.
In structure I, alkyl, alkoxy, independently or as a prefix, refers to groups having 1 to 8 carbon atoms unless otherwise defined. Aryl, aroyl and aryloxy, independently or as a prefix, refers to groups having 6 to 10 carbon atoms. Halogen and halo refers to fluoro, bromo, chloro, or iodo. Hetaryl and heteroaromatic refers to 5 or 6 membered unsaturated rings containing at least one hetero atom such as nitrogen, sulfur or oxygen. Carbocyclic refers to 5 to 7 membered saturated rings.

The structural features of the dyes that provide novelty are the combination of (a) the sulfonyl- or acylamino substituents on the aniline ring and (b) the heterocyclylazo-component derived from a nitrogen containing 6-membered ring heterocycle.

The optical recording elements provided by the present invention have a transparent substrate and on the surface of the substrate, a recording layer and a light reflecting layer wherein the recording layer comprises a metal complex of a dye of structure I and the recording layer has (a) a real part of the refractive (N) value at 780 nm of not less than 1.8 and (b) an imaginary part (k) not greater than 0.15.

Dyes included within structure I include structure II as follows: 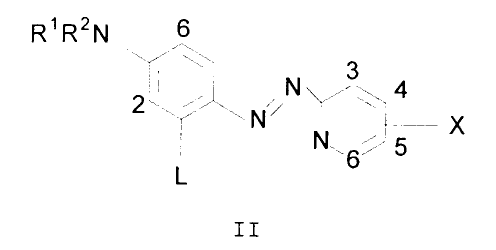 wherein:
R₁ and R₂, each independently, represent methyl, ethyl, propyl;
L represents acetamido, methanesulfonamido, ethoxycarbonylamino, phenoxycarbonylamino, propionamido, butanesulfonamido, p-tolylureido, phenylureido, norbornenoylamino, or t-butoxycarbonylamino; and
X represents methoxy, nitro, chloro, methyl, or a ring nitrogen; or
R₁ represents the atoms necessary to complete a tetrahydroquinoline ring fused at the 1 and 6 positions of the aniline ring.

Metal complexes are formed between the dyes of Structures I and II and polyvalent transition metal ions such as Ni²⁺, Cu²⁺, Co³⁺, and so forth Such complexes may be formed in situ during the preparation of the recording layer or prepared and isolated in a separate step.

Representative metal complexes of dyes within structures I and II are presented in structures III as follows: 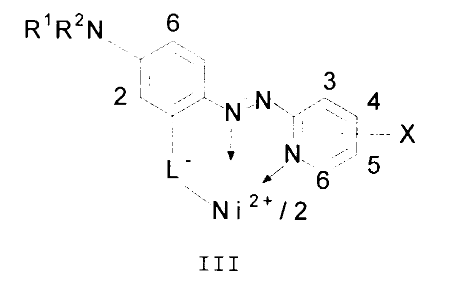 wherein
R₁ and R₂, each independently, represent methyl, ethyl, propyl;
L represents acetamido, methanesulfonamido, ethoxycarbonylamino, phenoxycarbonylamino, propionamido, butanesulfonamido, p-tolylureido, phenylureido, norbornenoylamino, or
t-butoxycarbonylamino; and
X represents methoxy, nitro, chloro, methyl, or a ring nitrogen; or
R₁ represents the atoms necessary to complete a tetrahydroquinoline ring fused at the 1 and 6 positions of the aniline ring.

According to the present invention there is also provided a method for recording optical information comprising the steps of providing an optical recording element, as hereinbefore described, and focusing an information modulated laser beam on the recording layer thereby forming a pattern of different specular reflectivity in the element.

Dyes of the present invention, and metal complexes thereof, have not been described for use in optical recording elements. To demonstrate the unobviousness of the present invention we have prepared examples of the closest prior art dyes and provided comparative testing results.

Heterocyclylazoaniline dyes can be prepared by the procedures described in JACS, 73, 4604(1951), US Patent 4,837,308 or Chemistry Express, 2, 611(1987). Typical preparations are described below.

The following preparation of dyes 2 (Table 1)and 2A, (1:2Ni⁺²:dye complex of dye 2, in Table 2) is representative of the procedures used to prepare heterocyclylazoaniline dyes and metal complexes.

### Preparation of [N,N-di-n-propyl-3-acetamido-4-(3-methoxy-5-nitro-2-pyridylazo)aniline] (Dye 2)

To a suspension of 14.04g (0.06 mole) N,N-di-n-propyl-3-acetamidoaniline and 11.05g (0.06 mole) 3-methoxy-5-nitro-2-pyridylhydrazine in 90mL of dimethylformamide (DMF) was added 30mL of acetic acid. The stirred reaction mixture was maintained at about 20°C with an external water bath and 1.5g (0.006 mole) I₂ was added followed by the dropwise addition of 75mL of a 6% aqueous solution of hydrogen peroxide over 30 minutes. The reaction mixture was stirred for 18 hr., diluted with 200mL of water and the crude product collected by filtration, washed with water and dried. Purification was effected by chromatography on silica gel (eluting with 10% ethyl acetate in methylene chloride) and crystallization from methanol to yield 16.48g of a dull green powder. The spectral properties of the parent dye and nickel complexed dye were:
λ-max=557nm(dimethylacetamide), 635nm(dimethylacetamide + Ni(OAc)₂)

### Synthesis of Compound 2A[1:2(Ni:dyel complex of N,N-di-n-propyl-3-acetamido-4-(3-methoxy-5-nitro-2 -pyridylazo)aniline] (Dye 2A)

To a suspension of 5.80g (0.014 mole) Compound 2 (above) in 50mL of methanol was added 1.74g (0.007 mole) nickel acetate tetrahydrate. The stirred reaction mixture was heated at reflux for 1.5 hours. After chilling in ice, the product was isolated by filtration and dried to yield 5.95g of a metallic green-brown crystalline solid.

### λ-max=626nm(dimethylacetamide)

Dyes within the scope of the invention are presented in Table 1 below. In all of the tables the symbols Ac, Me, Et, Pr, Bu and Ph refers to acetyl, methyl, ethyl propyl, butyl and phenyl respectively. Benzo refers to a fused 6-membered aromatic ring at the indicated positions.

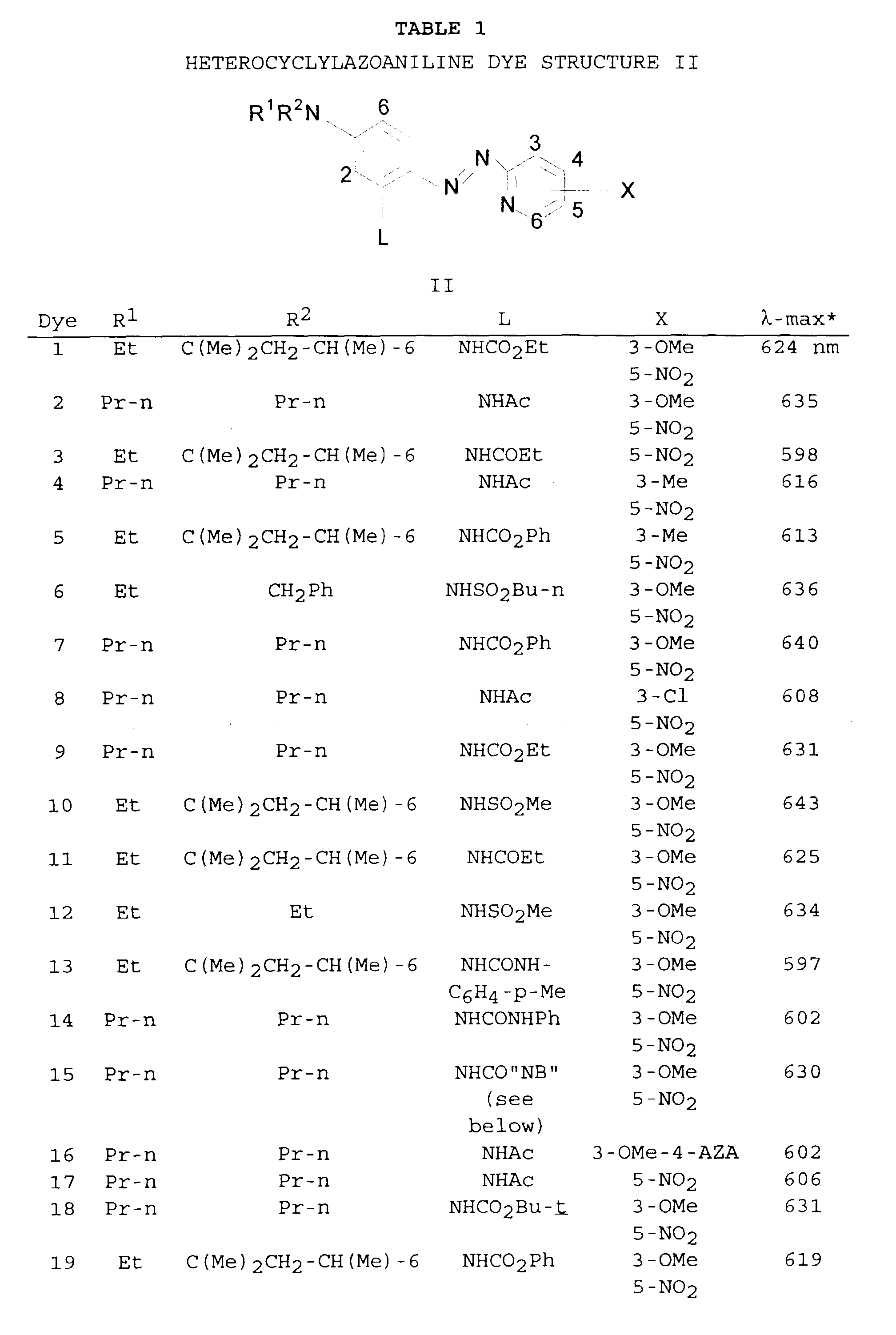

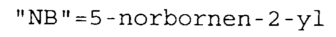

For comparison purposes Table 1A presents a set of comparison dyes similar to those in Table 1 except the dyes of Table 1A do not have an sulfonyl- or acylamino substituent as required by the heterocyclylazoaniline dves of the invention.

**TABLE 1A**

| Dye | R¹ | R² | L | X | λ-max* |
|---|---|---|---|---|---|
| C1 | -(CH₂)₃-2 | -(CH₂)₃-6 | H | 3-OMe | 670 |
| | | | | 4-AZA | |
| | | | | 5,6-BENZO | |
| C2 | Et | C(Me)₂CH₂-CH(Me)-6 | H | 3-OMe | 661 |
| C3 | -(CH₂)₃-2 | -(CH₂)₃-6 | H | 5-NO₂ | 649 |
| C4 | -(CH₂)₂-C(Me)₂-2 | -(CH₂)₂-C(Me)₂-6 | H | 3-OMe | 646 |
| C5 | Et | C(Me)₂CH₂-CH(Me)-6 | H | 5-NO₂ | 632 |
| | | | | | |
| C6 | -(CH₂)₃-2 | -(CH₂)₃-6 | H | 5-NO₂ | 676 |
| C7 | Et | Et | H | 5-NO₂ | 614 |
| C8 | Me | Me | H | 3,5-Cl₂ | 605 |
| C9 | Et | Et | H | 5-Br | 588 |
| C10 | Et | Et | H | 5-Cl | 558 |
| C11 | Et | Et | H | H | 553 |
| C12 | Et | Et | H | H | 539 |
| C13 | Me | Me | H | 5-Cl | 547 |
| C14 | Me | Me | H | H | 537 |

| | | | | | |
|---|---|---|---|---|---|
| *Measured in dimethylacetamide with added nickel acetate | | | | | |

Additional comparison dyes characterized by 5-membered ring heterocycles instead of the 6-membered rings of the invention were also prepared. These compounds are similar to those disclosed in Japanese Patent Application 03-268994. 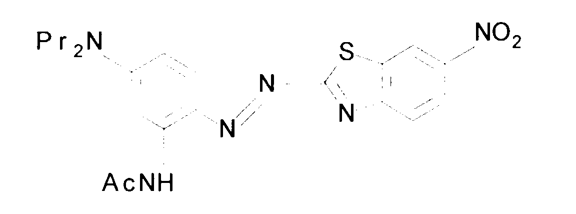 C15 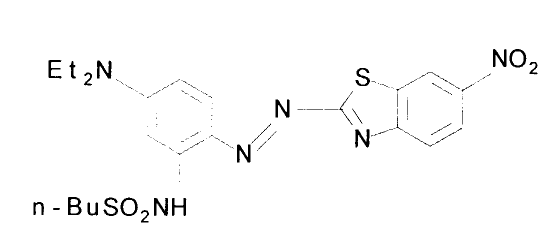 C16--similar to Dye 2-4 of JP0 3-268994

Table 2 presents preformed nickel complexes of the dyes of the invention prepared according to the procedure described above. The dye designations in the table are named to correspond with Table 1 dyes from which they were made.

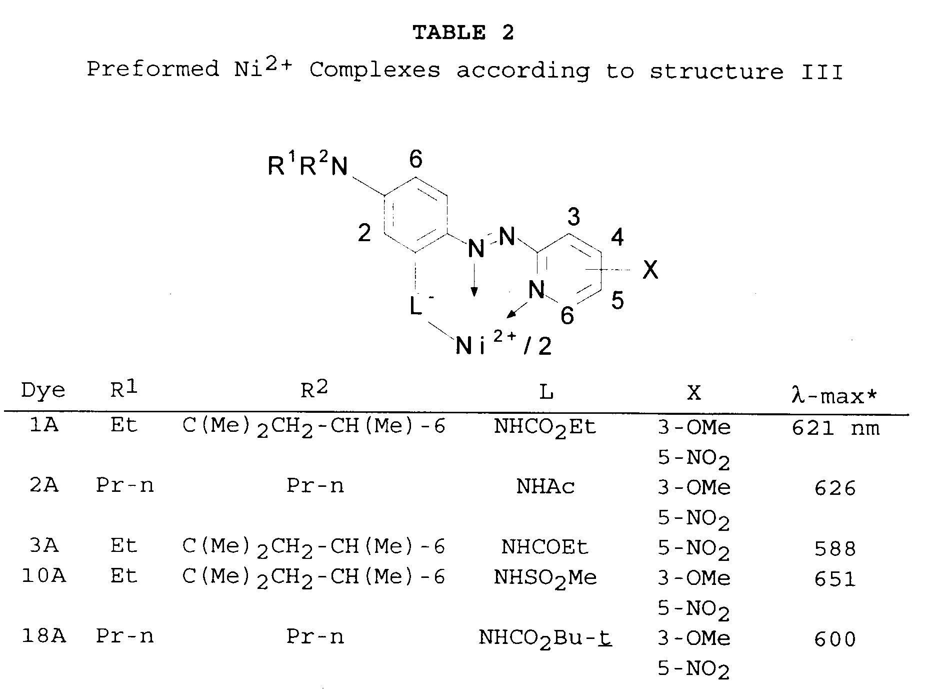

Table 2A presents preformed nickel dye complexes outside the scope of the invention because they lack the sulfonyl- or acylamino substituent as required by the heterocyclylazoaniline dyes of the invention. They are presented for comparison purposes.

**TABLE 2A**

| Dye | R¹ | R² | L | X | λ-max* |
|---|---|---|---|---|---|
| C17 | Me | Ph | OH | 5-SO₂NHPr-i | 540 |
| C18¹ | Et | Et | OH | 5-Br | 531 |
| C19 | (CH₂)₃-2 | (CH₂)₃-6 | OH | 5-NO₂ | 577 |

| | | | | | |
|---|---|---|---|---|---|
| ¹Similar to Dye 11-54 of JP 04-361088 also Col 6, line 55 of U.S. Patent 4,686,143. | | | | | |
| *Measured in dimethylacetamide | | | | | |

Metal dye complexes of the invention can be prepared *in situ* by mixing the dye and an appropriate metal salt in the proper ratio in a suitable solvent prior to coating.

The optical elements of the invention comprise a light-transmitting, typically pre-grooved substrate, the metal complex dye of the recording layer overlaying the substrate, a light reflective layer overlaying the recording layer and a protective layer overlaying the light reflective layer. The recording process will produce marks of lower reflectivity than the unmarked areas of the disk when written and read with a diode laser emitting between 770 and 800 nm. It is preferred that the substituents on the dye molecule be selected so that the real part of the complex refractive index (N) of the unwritten light absorptive layer measured with 780 nm light is not less than 1.8 and the imaginary part (k) is not greater than 0.15.

The substrate may be any transparent material that satisfies the mechanical and optical requirements. The substrates are generally pre-grooved with groove depths from 20 nm to 250 nm, groove widths 0.2 to 1 µm and a pitch 1 to 2µm. The preferred material is polycarbonate, other materials are glass, polymethylmethacrylate and other suitable polymeric materials.

The preparation of the optical recording element of the invention is achieved by spin-coating a solution of the metal complex dye by itself, or mixtures with another dye or other dyes or with addenda from a suitable solvent onto a transparent substrate. For coating, the metal complex dye with or without addenda is dissolved in a suitable solvent so that the dye is 20 or less parts by weight to 100 parts of solvent by volume. The dye recording layer of the element is then overcoated with a metal reflective layer under reduced pressure by resistive heating or a sputter method and finally overcoated with a protective resin.

Coating solvents for the dye recording layer are selected to minimize their effect on the substrate. Useful solvents include as alcohols, ethers, hydrocarbons, hydrocarbon halides, cellosolves, ketones. Examples of solvents are methanol, ethanol, propanol, pentanol, 2,2,3,3-tetrafluoropropanol, tetrachloroethane, dichloromethane, diethyl ether, dipropyl ether, dibutyl ether, methyl cellosolve, ethyl cellosolve, 1-methyl-2-propanol, methy ethyl ketone, 4-hydroxy-4-methyl-2-pentanone, hexane, cyclohexane, ethylcyclohexane, octane, benzene, toluene, and xylene. Other less desirable solvents include water and dimethylsulfoxide. Preferred solvents are hydrocarbon solvents and alcohol solvents since they have the least effect on the preferred polycarbonate substrates.

Useful addenda for the recording layer include stabilizers, surfactants, binders and diluents.

The reflective layer can be any of the metals conventionally used for optical recording materials. Useful metals can be vacuum-evaporated or sputtered and include gold, silver, aluminum, copper and alloys thereof.

The protective layer over the reflective layer is similarly conventional for this art. Useful materials include UV curable acrylates.

One preferred protective layer is disclosed in commonly assigned United States Patent Application 815,020. This application, expressly incorporated herein by reference, discloses a two layer structure in which the layer adjacent to the reflective layer is spin-coated and the second layer is screen-printed.

An intermediate layer, to protect the metal layer from oxidation, can also be present.

The element of the invention can have prerecorded ROM areas as described in United States Patent 4,940,618. The surface of the substrate can have a separate heat-deformable layer as described in United States Patent 4,990,388. Other patents relating to recordable CD type elements are United States Patents 5,009,818; 5,080,946; 5,090,009; 4,577,291; 5,075,147; and 5,079,135.

The following examples demonstrate the utility of the dyes of the present invention.

### Preparation of Optical Recording Elements and Recording Data

For each of the dyes studied, an optical recording element was prepared by first dissolving the metal complex dye in an appropriate solvent (typically 2,2,3,3-tetrafluoro-1-propanol(TFP)) and spin-coating the solution onto silicon wafers. Spectroscopic ellipsometric analysis of the coated wafers provided the dispersion characteristics and the film thickness corresponding to the first reflectance maximum at 780nm in a writeable CD element was calculated. By means of spin-coating, a film of the metal dye complex on smooth (unfeatured) polycarbonate blanks at the appropriate film thickness was prepared; the methods being well known to those skilled in the spin-coating art. A complete element was prepared by applying 100nm of gold to the dye film by thermal evaporation and the gold layer was overcoated with 5um of a photocrosslinkable lacquer (Daicure SD-17).

The element was tested with an optical recording system based on a 780nm diode laser operating at record powers up to 18mw while the disk spun at a constant linear velocity of 2.8m/sec. The record pattern was an alternating sequence of I11 marks and lands (I11 marks as described in the International Standard ISO 10149) at 50% duty cycle. At each record power level, the readback signal (RF waveform generated by a read laser (also at 780nm) operating at low power) was captured by a spectrum analyzer which yielded the strength of the signal fundamental (also called 'carrier') in dBm. For each metal dye complex tested, the reflectance (R₀) of the element at 780nm, the recording contrast (I11/Itop) at 14mw record power, the sensitivity of the element (SS is the record power at which carrier exceeds - 10dBm) and the maximum carrier attained by the element were noted in Tables 3, 4 and 5.

**TABLE 3**

| Optical Recording Test Results 1:1 Dye:Ni complexes (prepared in situ from dye mixed with Nickel⁺²acetate) | | | | | | |
|---|---|---|---|---|---|---|
| Dye | N | k | R₀(%) | SS(mw) | max. carrier | I11/Itop |
| | 780nm | 780nm | 780nm | at -10dBm | (dBm) | @ 14mw |
| 1 | 2.22 | 0.073 | 71.1 | 12.0 | -5.4 | 0.29 |
| 2 | 2.21 | 0.037 | 80.7 | 12.0 | -1.6 | na |
| 9 | 2.36 | 0.059 | 81.3 | 11.7 | -0.6 | 0.38 |
| 10 | 2.27 | 0.021 | 85.2 | 14.3 | -4.5 | 0.15 |
| 11 | 2.27 | 0.059 | 78.8 | 10.8 | -0.5 | 0.50 |
| 12 | 2.29 | 0.039 | 84.4 | 17.2 | -6.9 | 0.08 |
| 13 | 2.16 | 0.076 | 73.8 | 13.5 | -3.3 | 0.25 |
| 14 | 2.29 | 0.073 | 80.2 | 11.1 | -0.8 | 0.45 |
| 19 | 2.33 | 0.029 | 79.8 | 10.9 | -3.2 | 0.37 |
| C1 | 2.29 | 0.101 | na | na | na | na |
| C2 | 2.38 | 0.074 | 83.1 | na | -24.1 | na |
| C3 | 2.34 | 0.031 | 81.0 | na | -10.2 | na |
| C4 | 2.11 | 0.085 | 49.1 | na | -19.1 | 0.08 |
| C5 | 2.09 | 0.011 | 91.8 | na | -66.0 | na |
| C6 | 2.53 | 0.203 | 66.0 | na | -10.2 | 0.20 |
| C7 | 2.06 | 0.003 | na | na | na | na |
| C8 | 2.11 | 0.001 | na | na | na | na |
| C9 | 1.92 | 0.003 | na | na | na | na |
| C10 | 1.87 | 0.005 | na | na | na | na |
| C11 | 1.84 | 0.005 | na | na | na | na |
| C12 | 1.84 | 0.001 | na | na | na | na |
| C13 | 1.85 | 0.001 | na | na | na | na |
| C14 | 2.06 | 0.000 | na | na | na | na |
| C15 | 1.96 | 0.009 | na | na | na | na |

Dyes not possessing a sulfonyl- or acylarnino substituent on the aromatic ring of the metal dye complex (that is metal dye complexes of Table 3 (C1-C14)) form 1:1 complexes with Ni(2⁺) but afforded poor performance (higher values of max. carrier) compared to dyes of the invention. Several of the comparative metal dye complexes had insufficient k to capture sufficient light to be recordable. Even those comparative dyes having sufficient k (C1, C2, C4 and C6) exhibited inferior recording performance compared to the metal dye complexes of the invention. Prior art dye C15 did not complex with Ni(2⁺), had no absorption at 780nm and was not recordable. The foregoing provides reasons for the notation "na" (not available) in the tables.

**TABLE 4**

| Optical Recording Test Results 2:1 Dye:Ni complexes (prepared in situ from dye mixed xith Nickel⁺²acetate) | | | | | | |
|---|---|---|---|---|---|---|
| Dye | N | k | R₀(%) | SS(mw) | max. carrier | I11/Itop |
| | 780nm | 780nm | 780nm | at -10dBm | (dBm) | @ 14mw |
| 1 | 2.33 | 0.07 | 75.1 | 10.1 | -1.6 | 0.43 |
| 2 | 2.38 | 0.046 | 79.8 | 11.7 | 0.06 | 0.48 |
| 3 | 2.19 | 0.033 | 85.7 | 14.0 | -0.6 | 0.17 |
| 4 | 2.29 | 0.020 | 84.6 | 14.7 | 0.8 | 0.03 |
| 5 | 2.20 | 0.032 | 83.6 | 14.8 | -4.1 | 0.07 |
| 6 | 2.19 | 0.042 | 85.0 | 16.0 | -3.8 | na |
| 7 | 2.30 | 0.020 | 82.4 | 13.8 | -3.3 | 0.53 |
| 8 | 2.30 | 0.020 | 80.0 | 14.6 | -0.9 | 0.11 |
| 9 | 2.36 | 0.044 | 82.4 | 11.9 | 0.3 | 0.40 |
| 10 | 2.32 | 0.02 | 86.4 | 13.9 | -0.6 | 0.20 |
| 11 | 2.30 | 0.056 | 77.5 | 11.1 | -0.5 | 0.45 |
| 12 | 2.36 | 0.037 | 86.7 | 17.4 | -3.8 | na |
| 14 | 2.32 | 0.069 | 76.3 | 11.0 | -2.0 | 0.35 |
| 15 | 2.17 | 0.047 | 76.5 | 13.5 | -1.2 | 0.33 |
| 16 | 2.04 | 0.022 | 85.5 | 17.5 | -7.5 | 0.09 |
| 19 | 2.36 | 0.034 | 84.4 | 10.9 | -2.5 | 0.38 |
| C16 | not recordable* | | | | | |

| | | | | | | |
|---|---|---|---|---|---|---|
| * Dye C16 (Similar to Dye 2-4 of JP 03-268994) formed a complex which did not absorb at 780nm and was not recordable. | | | | | | |

Metal dye complexes of the present invention (having the sulfonyl- or acylamino substituent on the aromatic ring (dyes 1-19) form 2:1 dye:Ni (2⁺) complexes. All the dyes of the above Table 4 (with the exception of prior art dye C16) possessed adequate k to be recordable.

The following Table 5 results were obtained using preformed metal dye complexes.

**TABLE 5**

| Optical Recording Test Results 2:1 Dye:Ni Preformed Complexes | | | | | | |
|---|---|---|---|---|---|---|
| Dye | N | k | R₀(%) | SS(mw) | max. carrier | I11/Itop |
| | 780nm | 780nm | 780nm | at -10dBm | (dBm) | @ 14mw |
| 1A | 2.35 | 0.054 | 76.4 | 10.7 | -0.6 | 0.52 |
| 2A | 2.38 | 0.054 | 86.0 | 12.5 | -0.1 | 0.31 |
| 3A | 2.20 | 0.031 | 88.6 | 15.3 | -2.1 | 0.04 |
| 10A | 2.29 | 0.025 | 85.0 | 14.1 | -1.1 | 0.25 |
| 18A | 2.25 | 0.037 | 83.6 | 11.8 | -0.7 | 0.53 |
| C17 | 1.93 | 0.005 | 88.9 | unrecordable | | |
| C18¹ | 2.01 | 0.003 | 88.2 | unrecordable | | |
| C19 | 2.20 | 0.014 | | unrecordable | | |

| | | | | | | |
|---|---|---|---|---|---|---|
| ¹ Similar to Dye 11-54 of JP 04-361088 | | | | | | |

The metal dye complexes of the present invention (1A, 2A, 3A, 10A and 18A) afforded strong recording performance. Prior art dye complexes (C17-C19) possessed weak k at 780nm and were unrecordable.

The foregoing data, including controls and prior art comparisons demonstrate the unobviousness of the present invention. The data shows that prior art metal complex dyes not having the sulphonyl- or acylamino substituents on the aromatic ring and based on 6-membered ring heterocycles do not perform well in optical recording elements. On the other hand metal complex dyes of the invention perform well.

## Claims

1. A heterocyclylazoaniline dye having the structure (I) 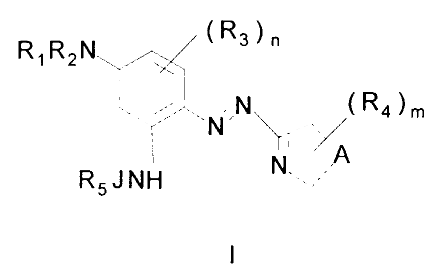 wherein:
R₁ and R₂ each independently, represents hydrogen, substituted or unsubstituted alkyl of 1-12 carbon atoms, aryl of 6-10 carbon atoms or allyl; wherein the substituents for each of the latter 3 groups include hydroxy, acyloxy, alkoxy, aryloxy, alkylthio, arylthio, alkylsulfonyl, arylsufonyl, thiocyano, cyano, nitro, halogen, alkoxycarbonyl, aryloxycarbonyl, acetyl, aroyl, alkylaminocarbonyl, arylaminocarbonyl, alkylaminocarbonyloxy, arylaminocarbonyloxy, acylamino, amino, alkylamino, arylamino, carboxy, sulfo, trihalomethyl, alkyl, aryl, hetaryl, alkylureido, arylureido, succinimido and phthalimido; provided that only one of R₁ and R₂ is hydrogen;
R₃ and R₄, each independently represents H, acyloxy, alkoxy, aryloxy, alkylthio, arylthio, alkylsulfonyl, arylsulfonyl, alkylaminosulfonyl, arylaminosulfonyl, thiocyano, cyano, halogen, alkoxycarbonyl, aryloxycarbonyl, acetyl, aroyl, alkylaminocarbonyl, arylaminocarbonyl, alkylaminocarbonyloxy, arylaminocarbonyloxy, acylamino, amino, alkylamino, arylamino, trihalomethyl, alkyl, aryl, hetaryl, alkylureido, arylureido, succinimido, phthalimido, or nitro;
R₅ represents substituted or unsubstituted alkyl of 1-12 carbon atoms, aryl of 6-10 carbon atoms or allyl; wherein the substituents for each of the latter 3 groups include hydroxy, acyloxy, alkoxy, aryloxy, alkylthio, arylthio, alkylsulfonyl, arylsufonyl, thiocyano, cyano, nitro, halogen, alkoxycarbonyl, aryloxycarbonyl, acetyl, aroyl, alkylaminocarbonyl, arylaminocarbonyl, alkylaminocarbonyloxy, arylaminocarbonyloxy, acylamino, amino, alkylamino, arylamino, carboxy, sulfo, trihalomethyl, alkyl, aryl, hetaryl, alkylureido, arylureido, succinimido, phthalimido; or
(a) R₁ and R₂ can join together to form a 5- or 6-membered ring such as morpholine, pyrroline or piperazine; or (b) either R₁ or R₂, or both of R₁ and R₂ can join with R₃ to form a 5- or 6-membered ring; or (c) two adjacent R₃ substituents can combined to form a 5- or 6-membered carbocylic or heterocyclic saturated or aromatic ring; or (d) any two of R₄ substituents located on adjacent carbon atoms can be combined together to form a 5 or 6 membered saturated or unsaturated heterocyclic ring or carbocyclic ring ;
n represents 1 to 3;
m represents 1 to 4;
J represents -CO- or -SO₂-; and
A represents the atoms necessary to form a 6-membered heteroaromatic ring.

2. A dye as claimed in claim 1 having the structure II: 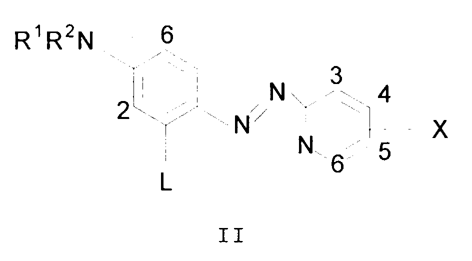 wherein:
R₁ and R₂, each independently, represent methyl, ethyl, propyl;
L represents acetamido, methanesulfonamido, ethoxycarbonylamino, phenoxycarbonylamino, propionamido, butanesulfonamido, p-tolylureido, phenylureido, norbornenoylamino, or
t-butoxycarbonylamino; and
X represents methoxy, nitro, chloro, methyl, or a ring nitrogen; or
R₁ represents the atoms necessary to complete a tetrahydroquinoline ring fused at the 1 and 6 positions of the aniline ring.

3. A dye as claimed in claim 2 selected from dyes 1-19 of Table 1.

4. A metal dye complex having structure III: 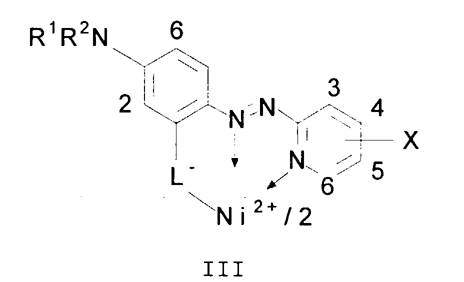 wherein:
R₁ and R₂, each independently, represent methyl, ethyl, propyl;
L represents acetamido, methanesulfonamido, ethoxycarbonylamino, phenoxycarbonylamino, propionamido, butanesulfonamido, p-tolylureido, phenylureido, norbornenoylamino, or
t-butoxycarbonylamino; and
X represents methoxy, nitro, chloro, methyl, or a ring nitrogen; or
R₁ represents the atoms necessary to complete a tetrahydroquinoline ring fused at the 1 and 6 positions of the aniline ring.

5. A metal dye complex as claimed in claim 4 wherein the metal dye complex is selected from Table 2.

6. A metal dye complex as claimed in claim 4 wherein the dye is selected from 1, 2, 3, 7, 9, 11, 14, 18 and 19 of Table 1.

7. A transition metal complex of the dyes as claimed in either of claims 1 and 2.

8. A metal complex as claimed in claim 7 wherein the metal is nickel.

9. An optical recording element having a transparent substrate and on the surface of the substrate, a recording layer and a light reflecting layer wherein the recording layer comprises a metal complex of a dye as claimed in either of claims 1 and 2 and the recording layer has (a) a real part of the refractive (N) value at 780 nm of not less than 1.8 and (b) an imaginary part (k) not greater than 0.15.

10. An element as claimed in claim 9 wherein the dye is selected from dyes 1-19 of Table 1.

11. An optical recording element having a transparent substrate and on the surface of the substrate, a recording layer and a light reflecting layer wherein the recording layer comprises a metal complex of a dye and the recording layer has (a) a real part of the refractive (N) value at 780 nm of not less than 1.8 and (b) an imaginary part (k) not greater than 0.15 and the metal dye complex has the structure III: 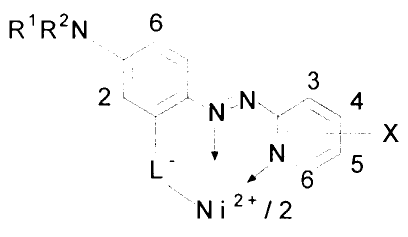 wherein:
R₁ and R₂, each independently, represent methyl, ethyl, propyl;
L represents acetamido, methanesulfonamido, ethoxycarbonylamino, phenoxycarbonylamino,
propionamido, butanesulfonamido, p-tolylureido, phenylureido, norbornenoylamino, or
t-butoxycarbonylamino; and
X represents methoxy, nitro, chloro, methyl, or a ring nitrogen; or
R₁ represents the atoms necessary to complete a tetrahydroquinoline ring fused at the 1 and 6 positions of the aniline ring.

12. An element as claimed in claim 11 wherein the metal dye complex is selected from Table 2.

13. An element as claimed in claim 12 wherein the metal complex is formed from a dye selected from 1, 2, 3, 7, 9, 11, 14, 18 and 19 of Table 1.

14. A method for recording optical information comprising the steps of:
providing an optical recording element according to any one of claims 9-13; and
focusing an information modulated laser beam on the recording layer thereby forming a pattern of different specular reflectivity in the element.
